(19) **Europäisches Patentamt European Patent Office Office européen des brevets**

(11) **EP 4 509 891 B1**

(12) **EUROPEAN PATENT SPECIFICATION**

(45) Date of publication and mention
of the grant of the patent:
**17.06.2026 Bulletin 2026/25**

(51) International Patent Classification (IPC):
**G02B 6/028** (2006.01) **G02B 6/036** (2006.01)

(52) Cooperative Patent Classification (CPC):
**G02B 6/0281; G02B 6/0283; G02B 6/0288;
G02B 6/03644; G02B 6/03666**

(21) Application number: **22967674.7**

(22) Date of filing: **12.12.2022**

(86) International application number:
**PCT/CN2022/138419**

(87) International publication number:
**WO 2024/119527 (13.06.2024 Gazette 2024/24)**

(54) **BEND-INSENSITIVE HIGH-BANDWIDTH MULTI-MODE OPTICAL FIBER**

BIEGEUNEMPFINDLICHE MULTIMODALE GLASFASER MIT HOHER BANDBREITE

FIBRE OPTIQUE MULTIMODE À BANDE PASSANTE ÉLEVÉE INSENSIBLE À LA COURBURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.12.2022 CN 202211580712**

(43) Date of publication of application:
**19.02.2025 Bulletin 2025/08**

(73) Proprietors:
• **Jiangsu Alpha Optic-Electric Technology Co.,
Ltd**
**Suzhou, Jiangsu 215000 (CN)**
• **Hengtong Optic-Electric Co., Ltd**
**Suzhou, Jiangsu 215234 (CN)**
• **Hengtong Optical Material Co., Ltd**
**Suzhou, Jiangsu 215200 (CN)**

(72) Inventors:
• **HUANG, Qiushi**
**Suzhou, Jiangsu 215000 (CN)**
• **WU, Hanzhao**
**Suzhou, Jiangsu 215000 (CN)**
• **YAN, Min**
**Suzhou, Jiangsu 215000 (CN)**
• **SUN, Keyuan**
**Suzhou, Jiangsu 215000 (CN)**
• **LIAO, Jianhui**
**Suzhou, Jiangsu 215000 (CN)**
• **GENG, Xing**
**Suzhou, Jiangsu 215000 (CN)**
• **YANG, Junsheng**
**Suzhou, Jiangsu 215000 (CN)**
• **ZHANG, Xianyu**
**Suzhou, Jiangsu 215000 (CN)**
• **WANG, Jianjiang**
**Suzhou, Jiangsu 215000 (CN)**
• **WANG, Qiuan**
**Suzhou, Jiangsu 215000 (CN)**

(74) Representative: **Chung, Hoi Kan
Mandarin IP Limited
7 Cherry Trees
Great Shelford
Cambridge CB22 5XA (GB)**

(56) References cited:
| | |
|---|---|
| CN-A- 104 698 535 | CN-A- 106 324 752 |
| CN-A- 106 371 167 | CN-A- 106 383 379 |
| CN-A- 108 333 671 | CN-A- 111 221 073 |
| CN-A- 113 885 121 | US-A1- 2011 123 162 |
| US-A1- 2016 266 308 | US-A1- 2021 405 286 |
| US-A1- 2022 011 503 | US-B2- 8 565 568 |

EP 4 509 891 B1

**Description**

TECHNICAL FIELD

The present invention belongs to the technical field of optical communications, and specifically relates to a bending-insensitive high-bandwidth multimode optical fiber.

BACKGROUND

According to TIA/EIA-492AAA standard, multimode optical fibers can be classified into four types, namely OM1, OM2, OM3, and OM4. A high-bandwidth multimode optical fiber (e.g., OM3/OM4) is widely used in short- and medium-distance fiber optic network systems due to relatively low system costs. The application scenarios of the multimode optical fiber are often a narrow cabinet, a distribution box and other integrated systems. However, when a conventional multimode optical fiber has bending in a small angle, a higher-order mode transmitted near the edge of the optical fiber core can easily be leaked out, resulting in the loss of a signal packet. When the refractive index profile of a bending-resistance multimode optical fiber is designed, a method for increasing a low refractive index region in an optical fiber cladding is generally used to limit the leakage of a higher-order mode and minimize signal loss. In the profile design and process design of a bending-insensitive multimode optical fiber, a main difficulty is how to ensure the macro bending performance, Differential Mode Delay (DMD) performance, and bandwidth performance of the optical fiber through relevant design and obtain an optimal value.

To obtain a high-bandwidth multimode optical fiber with good stability, the refractive index profile of the optical fiber, especially the refractive index profile of a core layer, is precisely matched with an expected profile. A core layer of a preformed rod of the optical fiber is usually designed to be doped with a certain concentration of one or more of germanium, fluorine, chlorine, phosphorus, and the like, achieving the desired refractive index distribution of the core layer of the optical fiber. The types and contents of dopant elements in the core layer of the optical fiber affect the material dispersion of the optical fiber and thus the sensitivity of the bandwidth of the optical fiber to a wavelength. $SiO_2$ doped with germanium has a higher material dispersion. Therefore, the existing multimode optical fiber with a higher germanium-doped amount has a very narrow wavelength range corresponding to high bandwidth performance. A small change in the wavelength of a light source can bring about a sharp decrease in the bandwidth performance. However, the multimode optical fiber used in a wavelength division multiplexing (WDM) system needs to maintain high bandwidth performance over a wider range of wavelengths. The transmission distance of a conventional multimode optical fiber with a higher germanium-doped amount in the WDM system is often limited.

Not only material dispersion affects the bandwidth of the multimode optical fiber, but also intermode dispersion affects the bandwidth performance. To reduce the intermode dispersion of the optical fiber, it is necessary to design the refractive index profile of a core layer of the multimode optical fiber into refractive index distribution with a continuous and gradual decrease from a center to edges, i.e., the refractive index distribution with the following power exponential function:

$$n^2(r) = n_1^2[1 - 2\Delta_0(r/a)^\alpha]$$

$$r < a$$

where $n_1$ is the refractive index of the axis center of the optical fiber; r is the distance away from the axis center of the optical fiber; a is the radius of the core of the optical fiber; $\alpha$ is a distribution index; and $\Delta_0$ is the refractive index of the core center of the optical fiber relative to a cladding.

The computational formula of the relative refractive index difference, i.e. $\Delta_i$, is as follows:

$$\Delta_i\% = [(n_i^2 - n_0^2)/2n_i^2] \times 100\%$$

where $n_i$ is the refractive index at a position i from the core center of the optical fiber; $n_0$ is the minimum refractive index of the core layer of the optical fiber, which is usually also the refractive index of the cladding of the optical fiber.

Relevant studies have shown that for the bending-insensitive multimode optical fiber, the amount of doping, the viscosity after doping, and the design of the refractive index of the profile of the core layer affect the DMD and bandwidth of the optical fiber. Therefore, to allow the multimode optical fiber to have good bending-insensitive performance and high-bandwidth performances, it is necessary to optimize a doping system, the viscosity ratio, and the structure of the profile of the multimode optical fiber.

A Chinese invention patent, Publication No. CN 106383379 A, publishes a bending-insensitive high-bandwidth multimode optical fiber, which produces one fluorine-doped platform layer after a fluorine-doped amount in fluorine germanium co-doping in a core layer gradually increases, and which also carries out fluorine germanium co-doping in an inner cladding. However, the fluorine-doped amount of the inner cladding is not continuous with a platform layer, which is prone to form a stress sudden-change zone between the core layer and a sunken cladding. The viscosity of the optical fiber changes greatly, affecting the bandwidth performance and attenuation performance of the optical fiber.

To balance the stress and viscosity between the core layer and the sunken cladding, the platform layer is usually designed in the inner cladding between the core layer and the sunken cladding. The relative refractive index difference of the platform layer is one fixed value. However, because a stress between the core layer and the sunken cladding is changed with a change in a radius during the pulling process of the multimode optical fiber, designing the relative refractive index difference of the platform layer as the fixed value can not well balance the stress and viscosity between the core layer and the sunken cladding. In addition, due to different dopants, the platform layer is deformed after the optical fiber is pulled. Therefore, designing the inner cladding as the platform layer with a constant relative refractive index difference in designing the optical fiber can not completely match the stress and viscosity between the core layer and the sunken cladding. The compensation of the stress and viscosity after the optical fiber is pulled is taken into account.

To solve the above problems of stress difference and viscosity difference, the present application provides a bending-insensitive high-bandwidth multimode optical fiber and a method for preparing the same, and designs a tilted inner cladding structure with a relative refractive index difference, so that the stress and viscosity between the sunken cladding and the core layer can form a continuity, eliminating a sudden-change region, reducing the attenuation of the optical fiber and improving bandwidth performance.

SUMMARY

To solve the technical problems in the prior art, an objective of the present invention is to provide a bending-insensitive high-bandwidth multimode optical fiber and a method for preparing the same.

To realize the above objective and achieve the above technical effect, the technical solution adopted in the present invention is as follows:

A bending-insensitive high-bandwidth multimode optical fiber includes a core layer, an extension layer, an inner cladding, a sunken cladding, and an outer cladding disposed sequentially from inside to outside. The core layer has a parabolic refractive index profile, 1.9 to 2.2 of a distribution index $\alpha$, 0.9% to 1.2% of the maximum relative refractive index difference $\Delta 1$ at a center and 24 $\mu$m to 25 $\mu$m of a radius R1. The extension layer has -0.03% to -0.02% of a relative refractive index difference $\Delta 2$. The difference between the radius R2 of the extension layer and the radius R1 of the core layer is 0.5 $\mu$m to 3 $\mu$m. The inner cladding has 0.005% to 0.03% of the difference between the highest relative refractive index difference and the lowest relative refractive index difference, and 0.5 $\mu$m to 4 $\mu$m of an unilateral radial width. The sunken cladding has 3 $\mu$m to 9 $\mu$m of an unilateral radial width and 0.7% to -0.4% of a relative refractive index difference $\Delta 4$.

Further, the extension layer and the inner cladding are silicon dioxide glass layers doped with a dopant, respectively.

Further, the dopant includes one or a combination of a plurality of fluorine, aluminum, calcium, magnesium, titanium, zirconium, iron, cobalt, nickel, manganese, copper, lithium, sodium, potassium, boron, germanium, and phosphorus.

Further, the outer cladding is a pure silicon dioxide glass layer and has 62 $\mu$m to 63 $\mu$m of a radius R5.

Further, the optical fiber has a bending additional loss of less than 0.2 dB at a wavelength of 850 nm resulting from circling 2 times with a bending radius of 7.5 mm and the bending additional loss of less than 0.5 dB at the wavelength of 1300 nm resulting from circling 2 times with the bending radius of 7.5 mm.

Compared with the prior art, the beneficial effects of the present invention are as follows:

The present invention discloses a bending-insensitive high-bandwidth multimode optical fiber, including a core layer, an extension layer, an inner cladding, a sunken cladding, and an outer cladding disposed sequentially from inside to outside. The core layer has a parabolic refractive index profile, 1.9 to 2.2 of a distribution index $\alpha$, 0.9% to 1.2% of the maximum relative refractive index difference $\Delta 1$ at a center and 24 $\mu$m to 25 $\mu$m of a radius R1. The extension layer has -0.03% to -0.02% of a relative refractive index difference $\Delta 2$. The difference between the radius R2 of the extension layer and the radius R1 of the core layer is 0.5 $\mu$m to 3 $\mu$m. The inner cladding has 0.005% to 0.03% of the difference between the highest relative refractive index difference and the lowest relative refractive index difference and 0.5 $\mu$m to 4 $\mu$m of an unilateral radial width. The sunken cladding has 3 $\mu$m to 9 $\mu$m of an unilateral radial width and -0.7% to -0.4% of a relative refractive index difference $\Delta 4$. The present invention allows the optical fiber to have good viscosity performance through reasonable doping, and optimizes the design of the fiber profile at the same time to improve the high bandwidth performance of the multimode optical fiber. The design and optimization of the viscosity of the fluorine/germanium doping of the extension layer and the inner cladding is focused on. Fluorine/germanium or other dopants (e.g., phosphorus) are used to be co-doped in the extension layer (R2-R1). The ratio of fluorine doping increases from the core layer to the extension layer. Fluorine/germanium or other dopants (e.g., phosphorus) are used to be co-doped in the inner cladding (R3-R2). The inner cladding has the same doping amount (excluding fluorine) as that at the outermost end of the extension layer and has the ratio of the fluorine doping that is variable and gradually decreases with an increase in a radius, instead of only using the fluorine doping and keeping unchanged the amount of the fluorine doping. The inner cladding can be variably doped with fluorine, which can be adjusted according to the stress and viscosity tests of the optical fiber. The appropriate variable doping amount and the width of the inner cladding can be selected, thereby achieving an optimal stress difference between the core layer and the extension layer as well as the sunken cladding, reducing the sensitivity of the bandwidth of the optical fiber to a wavelength, and allowing the optical fiber to have a good bending resistance while having a super-high bandwidth performance.

## BRIEF DESCRIPTION OF THE DRAWINGS

FIG. 1 is a schematic diagram of a refractive index profile of the present invention; and
FIG. 2 is a schematic diagram of a fluorine-doped amount of the present invention.

## DETAILED DESCRIPTION OF THE EMBODIMENTS

The present invention is described in detail below so that the advantages and features of the present invention can be more readily understood by a person skilled in the art. Therefore, the scope of protection of the present invention can be more clearly and unambiguously defined.

A brief overview of one or more aspects is given below to provide a basic understanding of these aspects. This summary is not an exhaustive overview of all aspects contemplated, and is neither intended to identify the critical or decisive elements of all aspects nor to attempt to define the scope of any or all aspects. The sole objective is to give some idea of one or more aspects in a simplified form as a prelude to the more detailed description to be given later.

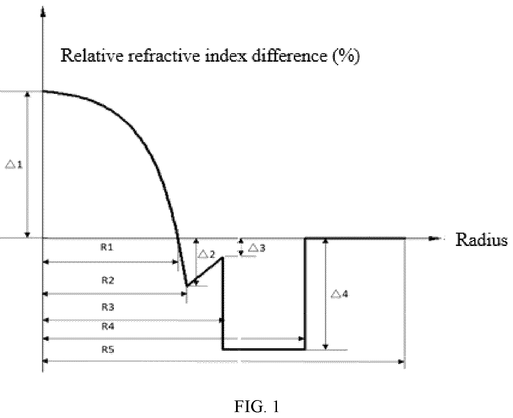

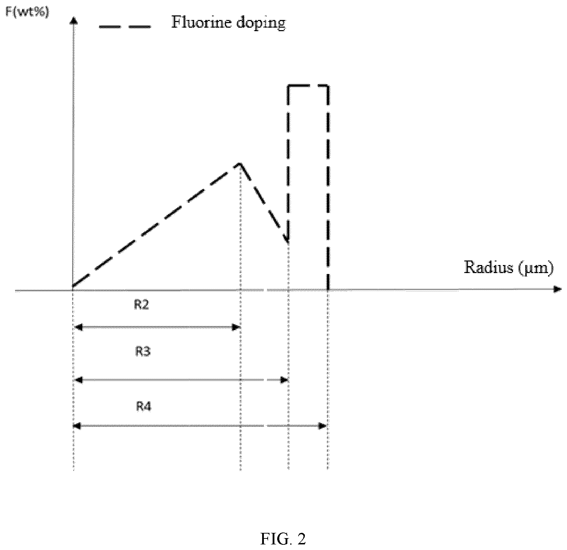

As shown in FIGS. 1-2, a bending-insensitive high-bandwidth multimode optical fiber includes a core layer, an extension layer, an inner cladding, a sunken cladding, and an outer cladding disposed sequentially from inside to outside. The core layer has a parabolic refractive index profile, 1.9 to 2.2 of a distribution index $\alpha$, 24 $\mu$m to 25 $\mu$m of a radius R1, and 0.9% to 1.2% of the maximum relative refractive index difference $\Delta1$ at a center. The extension layer has a radius R2, 0.5$\mu$m to 3$\mu$m of an unilateral radial width (R2-R1), and -0.03% to -0.02% of a relative refractive index difference $\Delta2$. The inner cladding has 0.005% to 0.03% of the difference ($\Delta3-\Delta2$) between the highest relative refractive index difference and the lowest relative refractive index difference and 0.5$\mu$m to 4$\mu$m of an unilateral radial width (R3-R2). The sunken cladding has 3 $\mu$m to 9 $\mu$m of an unilateral radial width (R4-R3) and -0.7% to -0.4% of a relative refractive index difference $\Delta4$. The outer cladding is a pure silicon dioxide glass layer and has 62 $\mu$m to 63 $\mu$m of a radius R5. A waveguide structure and a doping system are rationally designed, optimizing the viscosity of the optical fiber, and reducing the sensitivity of the bandwidth of the optical fiber to the wavelength. Therefore, the optical fiber has a good bending resistance while having an ultra-high bandwidth performance.

The extension layer and the inner cladding are silicon dioxide glass layers doped with a dopant, respectively. The dopant includes one or a combination of a plurality of fluorine, aluminum, calcium, magnesium, titanium, zirconium, iron, cobalt, nickel, manganese, copper, lithium, sodium, potassium, boron, germanium, and phosphorus.

For the present invention, the design and optimization of the viscosity of the fluorine/germanium doping of the extension layer and the inner cladding is focused on. Fluorine/germanium or other dopants (e.g., phosphorus) are used to be co-doped in the extension layer. The ratio of fluorine doping increases from the core layer to the extension layer. Fluorine/germanium or other dopants (e.g., phosphorus) are used to be co-doped in the inner cladding (R3-R2). The inner cladding has the same doping amount (excluding fluorine) as that at the outermost end of the extension layer and has the ratio of the fluorine doping that is variable and gradually decreases with an increase in a radius, instead of only using the fluorine doping and keeping unchanged the amount of the fluorine doping. The inner cladding can be variably doped with fluorine, which can be adjusted according to the stress and viscosity tests of the optical fiber. The appropriate variable doping amount and the width of the inner cladding can be selected, thereby achieving an optimal stress difference between the core layer and the extension layer as well as the sunken cladding, reducing the sensitivity of the bandwidth of the optical fiber to a wavelength, and allowing the optical fiber to have a good bending resistance while having a super-high bandwidth performance.

The optical fiber of the present invention has a bending additional loss of less than 0.2 dB at a wavelength of 850 nm resulting from circling 2 times with a bending radius of 7.5 mm and the bending additional loss of less than 0.5 dB at the wavelength of 1300 nm resulting from circling 2 times with the bending radius of 7.5 mm.

Embodiment 1

As shown in FIGS. 1-2, a bending-insensitive high-bandwidth multimode optical fiber comprising a core layer, an extension layer, an inner cladding, a sunken cladding, and an outer cladding disposed sequentially from inside to outside. The core layer has a refractive index profile in the form of a parabolic shape. Fluorine/germanium is co-doped in the core layer so that the core layer has 1.0% of the maximum relative refractive index difference $\Delta 1$ at a center, 2.08 of a distribution index $\alpha$, and 24.5 $\mu$m of a radius. The extension layer has a radius R2. Fluorine/germanium is co-doped in the extension layer, so that the extension layer has 2 $\mu$m of an unilateral radial width (R2-R1), and -0.03% of a relative refractive index difference $\Delta 2$. Fluorine is doped in the inner cladding. The inner cladding has -0.03% of the minimum relative refractive index difference $\Delta 2$, -0.02% of the maximum relative refractive index difference $\Delta 3$, 0.01% of the difference ($\Delta 3$-$\Delta 2$) between the maximum relative refractive index difference and the minimum relative refractive index difference, and 1.5 $\mu$m of an unilateral radial width (R3-R2). Fluorine is doped in the sunken cladding. The sunken cladding has -0.6% of a relative refractive index difference $\Delta 4$, and 6 $\mu$m of an unilateral radial width (R4-R3).

Performance tests are performed on Embodiment 1 and results are shown in Table 1.

Table 1

| The bandwidth (MHz·km) of the optical fiber | Embodiment 1 |
| --- | --- |
| @850 nm full injection bandwidth | 4260 |
| @1300 nm full injection bandwidth | 684 |
| @850 nm effective mode bandwidth | 7134 |
| R=7.5 mm, 2 turns @850 nm (dB) | 0.046 |
| R=7.5mm, 2 turns @1300nm (dB) | 0.153 |

The optical fiber of the present invention has a bending additional loss of less than 0.2 dB at a wavelength of 850 nm resulting from circling 2 times with a bending radius of 7.5 mm and the bending additional loss of less than 0.5 dB at the wavelength of 1300 nm resulting from circling 2 times with the bending radius of 7.5 mm.

A part or a structure that the present invention is not specifically described adopts the prior art or existing products, which is not repeated here.

The forgoing is only an embodiment of the present invention and does not therefore limit the patent scope of the present invention. The patent scope of the present invention is defined by the appended claims.

**Claims**

1. A bending-insensitive high-bandwidth multimode optical fiber, comprising a core layer, an extension layer, an inner cladding, a sunken cladding, and an outer cladding disposed sequentially from inside to outside, wherein the core layer has a parabolic refractive index profile, 1.9 to 2.2 of a distribution index $\alpha$, 0.9% to 1.2% of a maximum relative refractive index difference $\Delta 1$ at a center, 0.5 $\mu$m to 4 $\mu$m of an unilateral radial width, and the sunken cladding has 3 $\mu$m to 9 $\mu$m of an unilateral radial width and -0.7% to -0.4% of a relative refractive index difference $\Delta 4$, **characterized in that** the core layer has a radius R1 of 24 $\mu$m to 25 $\mu$m, the extension layer has -0.03% to -0.02% of a relative refractive index difference $\Delta 2$, a difference between the radius R2 of the extension layer and the radius R1 of the core layer is 0.5 $\mu$m to 3 $\mu$m and the inner cladding has 0.005% to 0.03% of a difference between a highest relative refractive index difference and a lowest relative refractive index difference.

2. The bending-insensitive high-bandwidth multimode optical fiber according to claim 1, **characterized in that** the extension layer and the inner cladding are silicon dioxide glass layers doped with a dopant, respectively.

3. The bending-insensitive high-bandwidth multimode optical fiber according to claim 2, **characterized in that** the dopant comprises one or a combination of a plurality of fluorine, aluminum, calcium, magnesium, titanium, zirconium, iron, cobalt, nickel, manganese, copper, lithium, sodium, potassium, boron, germanium, and phosphorus.

4. The bending-insensitive high-bandwidth multimode optical fiber according to claim 1, **characterized in that** the outer cladding is a pure silicon dioxide glass layer and has 62 $\mu$m to 63 $\mu$m of a radius R5.

5. The bending-insensitive high-bandwidth multimode optical fiber according to claim 1, **characterized in that** the optical fiber has a bending additional loss of less than 0.2 dB at a wavelength of 850 nm resulting from circling 2 times with a bending radius of 7.5 mm and the bending additional loss of less than 0.5 dB at the wavelength of 1300 nm resulting from circling 2 times with the bending radius of 7.5 mm.

**Patentansprüche**

1. Biegeunempfindliche multimodale Glasfaser mit hoher Bandbreite, umfassend: eine Kernschicht, eine Extensionsschicht, ein inneres Cladding, ein eingesenktes Cladding und ein äußeres Cladding, die aufeinanderfolgend von innen nach außen angeordnet sind, wobei die Kernschicht ein parabolisches Brechungsindexprofil, einen Verteilungsindex $\alpha$ von 1,9 bis 2,2, eine maximale relative Brechungsindexdifferenz $\triangle1$ von 0,9 % bis 1,2 % in einem Zentrum aufweist, das innere Cladding eine einseitige radiale Breite von 0,5 $\mu$m bis 4 $\mu$m aufweist und das eingesenkte Cladding eine einseitige radiale Breite von 3 $\mu$m bis 9 $\mu$m und eine relative Brechungsindexdifferenz $\triangle2$ von -0,7 % bis -0,4 % aufweist, **dadurch gekennzeichnet, dass** die Kernschicht einen Radius R1 von 24 $\mu$m bis 25 $\mu$m aufweist, die Extensionsschicht eine relative Brechungsindexdifferenz $\triangle2$ von -0,03 % bis -0,02 % aufweist, eine Differenz zwischen dem Radius R2 der Extensionsschicht und dem Radius R1 der Kernschicht 0,5 $\mu$m bis 3 $\mu$m beträgt und das innere Cladding eine Differenz zwischen einer höchsten relativen Brechungsindexdifferenz und einer niedrigsten relativen Brechungsindexdifferenz von 0,005 % bis 0,03 % aufweist.

2. Biegeunempfindliche multimodale Glasfaser mit hoher Bandbreite nach Anspruch 1, **dadurch gekennzeichnet, dass** die Extensionsschicht und das innere Cladding jeweils Siliciumdioxid-Glasschichten sind, die mit einem Dotierungsmittel dotiert sind.

3. Biegeunempfindliche multimodale Glasfaser mit hoher Bandbreite nach Anspruch 2, **dadurch gekennzeichnet, dass** das Dotierungsmittel eines oder eine Kombination aus einer Vielzahl von Fluor, Aluminium, Calcium, Magnesium, Titan, Zirconium, Eisen, Cobalt, Nickel, Mangan, Kupfer, Lithium, Natrium, Kalium, Bor, Germanium und Phosphor umfasst.

4. Biegeunempfindliche multimodale Glasfaser mit hoher Bandbreite nach Anspruch 1, **dadurch gekennzeichnet, dass** das äußere Cladding eine reine Siliciumdioxid-Glasschicht ist und einen Radius R5 von 62 $\mu$m bis 63 $\mu$m aufweist.

5. Biegeunempfindliche multimodale Glasfaser mit hoher Bandbreite nach Anspruch 1, **dadurch gekennzeichnet, dass** die Glasfaser einen Biegezusatzverlust von weniger als 0,2 dB bei einer Wellenlänge von 850 nm, resultierend aus einem 2-maligen Umkreisen mit einem Biegeradius von 7,5 mm, aufweist und den Biegezusatzverlust von weniger als 0,5 dB bei der Wellenlänge von 1300 nm, resultierend aus einem 2-maligen Umkreisen mit dem Biegeradius von 7,5 mm, aufweist.

**Revendications**

1. Fibre optique multimode à bande passante élevée insensible à la courbure, comprenant une couche d'âme, une couche d'extension, un gainage interne, un gainage enfoncé, et un gainage externe disposés en séquence de l'intérieur vers l'extérieur, dans laquelle la couche d'âme présente un profil d'indice de réfraction parabolique, un indice de distribution $\alpha$ allant de 1,9 à 2,2, une différence d'indice de réfraction relative maximale $\triangle1$ au centre allant de 0,9 % à 1,2 %, le gainage interne présente une largeur radiale unilatérale allant de 0,5 $\mu$m à 4 $\mu$m, et le gainage enfoncé présente une largeur radiale unilatérale allant de 3 $\mu$m à 9 $\mu$m et une différence d'indice de réfraction relative $\triangle2$ allant de -0,7 % à -0,4 %, **caractérisée en ce que** la couche d'âme présente un rayon R1 allant de 24 $\mu$m à 25 $\mu$m, la couche d'extension présente une différence d'indice de réfraction relative $\triangle2$ allant de -0,03 % à -0,02 %, une différence entre le rayon R2 de la couche d'extension et le rayon R1 de la couche d'âme est allant de 0,5 $\mu$m à 3 $\mu$m et le gainage interne présente une différence entre une différence d'indice de réfraction relative la plus élevée et une différence d'indice de réfraction relative la plus basse allant de 0,005 % à 0,03 %.

2. Fibre optique multimode à bande passante élevée insensible à la courbure selon la revendication 1, **caractérisée en ce que** la couche d'extension et le gainage interne sont des couches de verre de dioxyde de silicium dopées avec un dopant, respectivement.

3. Fibre optique multimode à bande passante élevée insensible à la courbure selon la revendication 2, **caractérisée en**

**ce que** le dopant comprend un ou une combinaison d'une pluralité de fluor, d'aluminium, de calcium, de magnésium, de titane, de zirconium, de fer, de cobalt, de nickel, de manganèse, de cuivre, de lithium, de sodium, de potassium, de bore, de germanium et de phosphore.

4. Fibre optique multimode à bande passante élevée insensible à la courbure selon la revendication 1, **caractérisée en ce que** le gainage externe est une couche de verre de dioxyde de silicium pur et présente un rayon R5 allant de 62 $\mu$m à 63 $\mu$m.

5. Fibre optique multimode à bande passante élevée insensible à la courbure selon la revendication 1, **caractérisée en ce que** la fibre optique présente une perte de courbure supplémentaire inférieure à 0,2 dB à une longueur d'onde de 850 nm résultant d'un cerclage de 2 fois avec un rayon de courbure de 7,5 mm et la perte de courbure supplémentaire inférieure à 0,5 dB à la longueur d'onde de 1300 nm résultant d'un cerclage de 2 fois avec le rayon de courbure de 7,5 mm.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106383379 A